# EUROPÄISCHE PATENTANMELDUNG

(11) **EP 1 085 733 A1**
(43) Veröffentlichungstag der Anmeldung: **21.03.2001**
(21) Anmeldenummer: 99440255.0
(22) Anmeldetag: 20.09.1999
(51) Int. Cl.: H04M 3/493, G06F 17/30, H04L 29/06

(54) **Computer-Produkt zur Aktualisierung von zentralisierten Daten für Telekommunikationszwecke**

(71) Anmelder: ALCATEL, 75008 Paris (FR)
(72) Erfinder: Pfleger, Nicolas, 67000 Strasbourg (FR)
(74) Vertreter: Rausch, Gabriele, Dr.

(57) **Zusammenfassung**

Es handelt sich um ein Computer-Produkt, das Datensätze für Computer-Programme enthält, die Daten verwalten, die sich auf Speichern (34, 36, 51, 52) von über ein Datennetz (30) verbundenen Rechnern (33, 35, 50) befinden. Diese Daten werden zur Herstellung von Telekommunikationsverbindungen verwendet. Teile des Computer-Produktes sind auf den Rechnern (33, 35, 50) und einer an mindestens einem dieser Rechner (33, 35, 50) angeschlossenen Telekommunikationsanlage (40) lauffähig. Das Computer-Produkt hält eine aktualisierte Version aller diesen Daten auf einem der Rechner (50) zentralisiert imstande, wobei mindestens einige der Daten dieser aktualisierten Version den Rechnern (33, 35) und der Telekommunikationsanlage (40) zur Verfügung gestellt sind.

## Beschreibung

Die Erfindung bezieht sich auf ein Computer-Produkt zur Aktualisierung von Daten, hauptsächlich zur Herstellung von Telekommunikationsverbindungen, nach dem Oberbegriff des Anspruches 1, sowie einen Rechner nach dem Oberbegriff des Anspruches 10, und eine Telekommunikationsanlage nach dem Oberbegriff des Anspruches 12.

Heutzutage werden Telekommunikationsanlagen zunehmend mit Schnittstellen und entsprechender Softwaren aufgerüstet, um die Telekommunikationsanlage an ein Datennetz (LAN - Local Area Network) anschließen zu können. Solche Telekommunikationsanlagen unterstützen auch rechnergesteuerte Telefonanwendungen (CSTA - Computer Supported Telephony Application oder CTI - Computer Telephony Integration). Der Zusammenschluß von Rechner und Telekommunikationsanlage fand in der Vergangenheit wegen den hohen verursachten Kosten nur bei sehr großen Anlagen statt. Ungefähr gleichzeitig zu der Popularisierung von Rechnern (PC, Lap-Top usw.) verbreiteten sich dennoch Telekommunikationsanlagen, die nur wenige Teilnehmerendgeräte zu bedienen hatten und zunehmend über einen Rechner unterstützt wurden. Dies ist oft der Fall in kleineren bis mittelständigen Unternehmen bei denen weniger als 50 Teilnehmerendgeräte zu bedienen sind.

Rechnergesteuerte Telefonanwendungen betreffen z.B. Anwendungen zur Verwaltung von Fax, E-Mail oder Rufnachrichten. Die Anbieter von solchen rechnergesteuerten Telefonanwendungen bemühen sich Programmanwendungen zu entwickeln, die über eine benutzerfreundliche grafische Oberfläche (GUI - Graphical User Interface) das Bearbeiten von solchen Telefonanwendungen mit z.B. Textverarbeitung ermöglichen.

Ein Beispiel hierfür ist aus der Zeitschrift AT&T Technology, Band 10, 1995, Seite 6-9 bekannt, in der ein Produkt genannt "Integrated Messaging" vorgestellt wird. Dieses Produkt von AT&T/Lotus bietet mit Hilfe einer Software eine Verbindung zwischen den unterschiedlichen Rechnern an, die Sprachnachrichten, E-Mail und/oder Fax empfangen können. Alle Rechner sind über ein Datennetz (LAN) miteinander verbunden. Diese Software ermöglicht einen Austausch von Nachrichten zwischen diesen Rechnern und einer aus Datennetz angeschlossenen Telekommunikationsanlage. Es werden Rufnummern und unterschiedliche Adressen der elektronischen Briefkästen ( E-Mail ) der jeweiligen Benutzer sowie gegebenenfalls spezifische Parameter dieser Benutzer auf einem Zentralrechner (Server) abgelegt. Dabei kann ein Benutzer mehrere elektronische Briefkästen zur Verfügung gestellt bekommen, z.B. einen ersten Briefkasten auf einem Rechner am Arbeitsplatz, einen zweiten Briefkasten auf einem tragbaren Rechner (Lap-Top) und einem dritten Briefkasten auf seinem drahtlosen Telefon. Es handelt sich dann um drei sich von einander unterscheidenden, d.h. auf drei unterschiedlichen Geräten abgelegte Briefkästen. Das Produkt "Integrated Messaging" führt in regelmäßigen Abständen einen Synchronisationszyklus durch in dem der Inhalt der drei Briefkästen nach wählbaren Kriterien zusammengestellt wird. Der Teilnehmer kann dann aus einem dieser Teilnehmerendgeräte Zugriff auf einen allgemeinen Briefkasten nehmen, der die Information der drei Briefkästen enthält.

Ein solches Produkt erleichtert die Verwaltung von Telekommunikationsnachrichten, die für ein und denselben Teilnehmer zugeteilt sind, selbst wenn es sich um unterschiedlichen Arten von Nachrichten handelt (Rufnachrichten, E-Mail oder Fax) und/oder wenn sie in unterschiedlichen Briefkästen abgelegt sind. Doch dieses Produkt synchronisiert nur Eingänge von Telekommunikationsnachrichten. Dieses Produkt bietet keinen direkten Zugriff auf der an das Datennetz angeschlossenen Telekommunikationsanlage. Jedes für Telekommunikationszwecke verwendete Teilnehmerendgerät z. B. ein Telefon mit dem eine Telekommunikationsverbindung aufgebaut wird, muß entweder über ein eigenes Adressbuch verfügen oder es bleibt dem Benutzer nicht erspart direkt die Rufnummer oder E-mail Adresse einzugeben.

Die Firma Kobra GmbH bietet ein Computer-Produkt genannt - Adress PLUS - mit dem ein Telefon aus einem Rechner sich steuern läßt. Dabei ist der Rechner über ein Datennetz an einem Server angeschlossen, wobei der Server selbst mit einer Telekommunikationsanlage verbunden ist. Das Telefon ist dann an der Telekommunikationsanlage angeschlossen. Aus der Gebrauchsanweisung dieses Produktes (siehe Merkblatt zur ISDN-Telefonie mit Adress PLUS - Seiten 1-7, Stand 8.10.1998) ist das automatische Wählen einer Telefonnummer aus dem Adressbuch eines Rechners bekannt. Wenn z.B. ein Arbeitsplatz mit einem solchen Rechner und einem an einer entsprechenden Telekommunikationsanlage angeschlossenen Telefon bestückt ist, wird eine Telefonverbindung an diesem Arbeitsplatz aufgebaut, indem- Adress PLUS - dem Server mitteilt, daß der Benutzer dieses Arbeitsplatzes z.B. die Nummer 12345 anrufen will. Die entsprechende Software im Server meldet der Telekommunikationsanlage, daß dieser Benutzer vom Telefon seines Arbeitsplatzes den Teilnehmer 12345 wählen will. Die Telekommunikationsanlage baut die Verbindung zwischen diesem Benutzer und dem Teilnehmer 12345 auf.

Dabei kann die Rufnummer 12345 des anzurufenden Teilnehmers in einem Speicher entweder auf dem Rechner des Arbeitsplatzes eines Benutzers (z. B. für private Rufnummer) oder auf dem Server (z. B. dienstliche Rufnummer) abgelegt sein. Befindet sich diese Rufnummer in einem privaten Adressbuch auf dem Rechner des Benutzers, dann ist diese Rufnummer nur aus diesem Rechner auswählbar. Im Unterschied hierzu sind die Rufnummern, die im allgemeinen Adressbuch auf dem Server abgelegt sind, für jedermann zugänglich. Diese Rufnummern werden sogar allen Telefone, die an der Telekommunikationsanlage angeschlossen sind, zur Verfügung gestellt. Somit kann ein Benutzer eines solchen Telefons, das z. B. ein Display aufweist, eine Rufnummer in diesem allgemeinen Adressbuch über dieses Display auswählen.

All dies führt dazu, daß Informationen zur Bildung einer Telekommunikationsverbindung, wie z.B. Rufnummern oder E-Mail Adressen auf unterschiedlichen Rechnern und/oder Telekommunikationsanlage abgelegt werden. Jeder Benutzer führt auf seinem Rechner sein eigenes persönliches Adressbuch. Die Nebenstellennummer und E-Mail Adresse der jeweiligen Arbeitsplätze befinden sich entweder auf einem als Server verwendeten Rechner oder einem Speicher der Telekommunikationsanlage. Eine vollständige Verwaltung aller Informationen, die für einen Aufbau einer Telekommunikationsverbindung benötigt werden, kann mit Hilfe dieses Produktes- Adress PLUS - nicht gewährleistet werden. Die Verwaltung und die Aktualisierung von Adressbüchern mit Hilfe dieses Produktes ist entsprechend aufwendig. Die Eintragung eines neuen Benutzers kann nur der Assistant Manager der Telekommunikationsanlage zusammen mit dem System Manager des Servers vornehmen. Zudem wird ein Benutzer sein persönliches Adressbuch nur von dem Rechner seines Arbeitsplatzes abfragen können, was eindeutig nicht befriedigend ist, falls der Benutzer mobil sein möchte und an mehreren Rechnern arbeitet.

Der Erfindung liegt die Aufgabe zugrunde, ein Computer-Produkt für Daten zur Herstellung von Telekommunikationsverbindungen zu konzipieren, das ein Verwalten und Bereitstellen aller möglichen Adressen wie Nebenstellennummern, Rufnummern oder E-Mail Adressen auf einfachste Art und Weise ermöglicht.

Die Aufgabe wird erfindungsgemäß durch ein Computer-Produkt nach der Lehre des Anspruches 1 sowie durch einen Rechner nach der Lehre des Anspruches 10 und eine Telekommunikationsanlage nach der Lehre des Anspruches 12 gelöst.

Die zentrale Ablage aller Adressen auf einem als Server verwendeten Rechner, der mit einer Telekommunikationsanlage und mehreren Rechnern verbunden ist, ermöglicht den unterschiedlichen Benutzern einen Zugriff darauf zu haben. Dieser Zugriff kann von unterschiedlichen Rechnern aus genommen werden. Jeder Benutzer behält die Möglichkeit, ein persönliches und nur ihm zugängliches Adressbuch zu gestalten. Dieses Adressbuch befindet sich erfindungsgemäß auf dem Server, auf dem Hauptteile des Computer-Produktes abgelegt sind. Die persönlichen Adressbücher der jeweiligen Benutzer bilden Teile von einem zentralisierten in dem Server aufgebauten Adressbuch.

Ein Benutzer kann sein persönliches Adressbuch aus unterschiedlichen Rechnern abfragen, und/oder zur Steuerung des neben ihm am nächsten liegenden Telefons verwenden. Der Benutzer behält die Möglichkeit Adressen auf einem lokalen Rechner zu speichern. Doch durch eine regelmäßige und automatische Synchronisierung der Inhalte aller Adressbücher wird gewährleistet, daß das Adressbuch im Server, das vom Computer-Produkt verwaltet wird, immer den neuesten Stand enthält. Diese regelmäßige Synchronisierung kann nach Art eines Back-Up, z.B. Nachts und im Hintergrund ablaufen. Ein solches Computer-Produkt bietet erhebliche Flexibilität. Zum Beispiel können pro Namenseintrag im dafür verwendeten Speicher einerseits Informationen wie Arbeitsrufnummer, Faxrufnummer usw. jedermann zugänglich gemacht werden und andererseits Informationen wie Privatrufnummer nur besonderen Benutzern zugänglich gemacht. Zudem können Änderungen an solchen Informationen seitens eines Benutzers direkt an einem als Rechner verwendeten Teilnehmerendgerät, das vom Computer-Produkt angesprochen wird, durchgeführt werden. Die Flexibilität, die mit einem solchen zentralisierten und aktualisierten Adressbuch verbunden ist, ermöglicht nicht nur Daten zur Herstellung einer Telekommunikationsverbindung pro Eintrag zu speichern, sondern auch andere Informationen wie z.B. eine Postadresse oder besondere persönliche Merkmale abzulegen.

Vorteilhafte Ausgestaltungen der Erfindung ergeben sich aus den abhängigen Ansprüchen, der nachfolgenden Beschreibung und den Zeichnungen.

Ein Ausführungsbeispiel der Erfindung wird nun unter Zuhilfenahme der beiliegenden Zeichnungen weiter erläutert.

Es zeigen:
- Fig. 1: eine schematische Darstellung von vernetzten Teilnehmerendgeräten, wie sie aus dem Stand der Technik bekannt ist,
- Fig. 2: eine schematische Darstellung von vernetzten erfindungsgemäßen Teilnehmerendgeräten,
- Fig. 3: eine schematische Darstellung der allgemeinen Architektur des erfindungsgemäßen Computer-Produktes,
- Fig. 4: eine schematische Darstellung einer spezifischen Architektur des Computer-Produktes nach Fig.3.

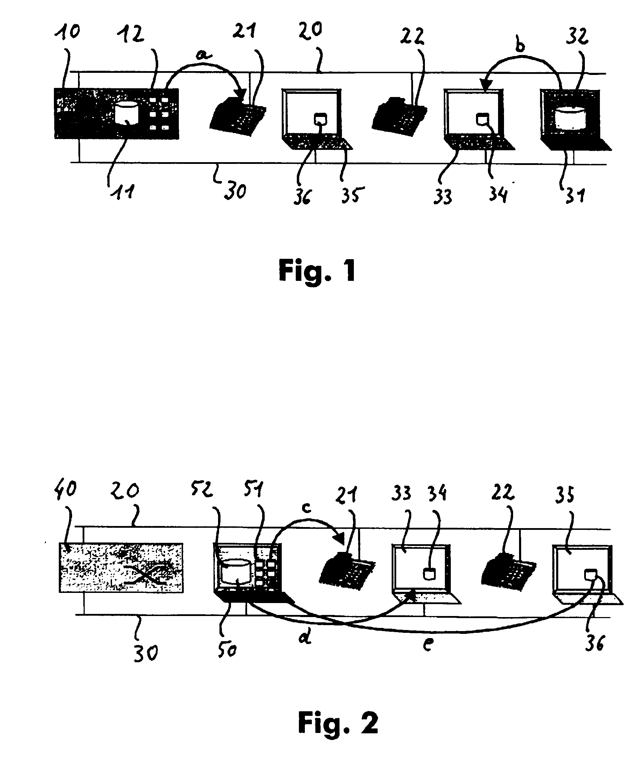

In der Fig. 1 ist schematisch dargestellt ein Beispiel wie Teilnehmerendgeräte, davon drei Rechner 31, 33, 35, an einem Datennetz 30 angeschlossen sind, das zu einer Telekommunikationsanlage 10 führt. Diese Telekommunikationsanlage 10 ist wie üblich über eine Telefonleitung 20 mit für Telekommunikationszwecke verwendeten Teilnehmerendgeräten wie Telefonen 21, 22 verbunden. Durch der Anschluß der Rechnern 31, 33, 35 über das Datennetz 30 an die Telekommunikationsanlage 10 kann ein Benutzer mit einem dieser Rechner eines der Telefone 21, 22 steuern. Hierfür benötigt er aber eine spezielle Software, die das Steuern der Telekommunikationsanlage 10 aus den Rechnern 31, 33, 35 ermöglicht.

Der Rechner 31 ist als Server verwendet, und in dessen Speicher 32 können Daten abgelegt werden, die über das Datennetz 30 den anderen Rechnern 33, 35 zur Verfügung gestellt werden. Diese Daten bestehen z.B. aus einer Liste von Namen, wie Kundennamen mit deren jeweiligen Adressen, Telefonnummern, E-Mail, usw. Diese Daten kann jeder Benutzer aus seinem Rechner 33, 35 abfragen " b ". Jeder Benutzer hat zudem die Möglichkeit auf seinem eigenen Rechner 33, 35 ein persönliches Adressbuch aufzubauen. Dieses ist dann auf den jeweiligen Speichern 34, 36 dieser Rechner 33, 35 abgelegt.

Zudem enthält die Telekommunikationsanlage 10 eigene Speicher 11, 12 in denen auch Telefonnummern von Adressaten abgelegt sind. Diese gespeicherten Telefonnummern können allen für Telekommunikationszwecke verwendeten Teilnehmerendgeräten, in diesem Fall Telefone 21, 22, die an der Telefonleitung 20 angeschlossenen sind, zur Verfügung gestellt werden. Entsprechend werden sie dann in dem einen zentralisierten Speicher 11 abgelegt. Sie können aber auch in dem unterteilten Speicher 12 abgelegt werden, um dann nur von einzelnen Teilnehmerendgeräten abgefragt zu werden. Somit kann jeder Benutzer dieser Telefone 21, 22 ein persönliches Telefonverzeichnis 12 besitzen, dessen Inhalt ganz oder teilweise nur von ihm gelesen und/oder geändert werden kann.

Wenn sich pro Arbeitsplatz sowohl ein Rechner 33 bzw. 35 als auch ein Telefon 21 bzw. 22 befindet, wobei sowohl der Rechner als auch das Telefon wie auf der Fig. 1 dargestellt, an die Telekommunikationsanlage 10 angeschlossen sind, hat der Benutzer eines solchen Arbeitsplatzes mehrere Möglichkeiten eine Telefonnummer zu wählen oder wählen zu lassen. Falls das Telefone 21, 22 mit einem Display versehen ist, kann der Benutzer direkt von seinem Telefon 21, 22 eine Telefonnummer entweder aus dem allgemeinen Telefonverzeichnis, das im Speicher 11 der Telekommunikationsanlage 10 abgelegt ist, oder aus seinem persönlichen Telefonverzeichnis, das im Speicher 12 der Telekommunikationsanlage 10 abgelegt ist, auswählen " a ". Andererseits kann der Benutzer am Rechner 33, 35 seines Arbeitsplatzes entweder direkt aus seinem persönlichen Adressbuch, das in dem entsprechenden Speicher 34, 36 seines Rechners 33, 35 abgelegt ist, oder über das Datennetz 30 aus dem allgemein zur Verfügung gestellten Adressbuch, das im Speicher 32 des Servers 31 abgelegt ist, eine Telefonnummer auswählen. Sie wird mit Hilfe einer zur Verfügung gestellten Software an die Telekommunikationsanlage 10 weitergereicht. Die Telekommunikationsanlage 10 wird dann diese ausgewählte Telefonnummer verwenden, um eine Telekommunikationsverbindung mit dem Telefon 21, 22 des Arbeitsplatzes des Benutzers aufzubauen.

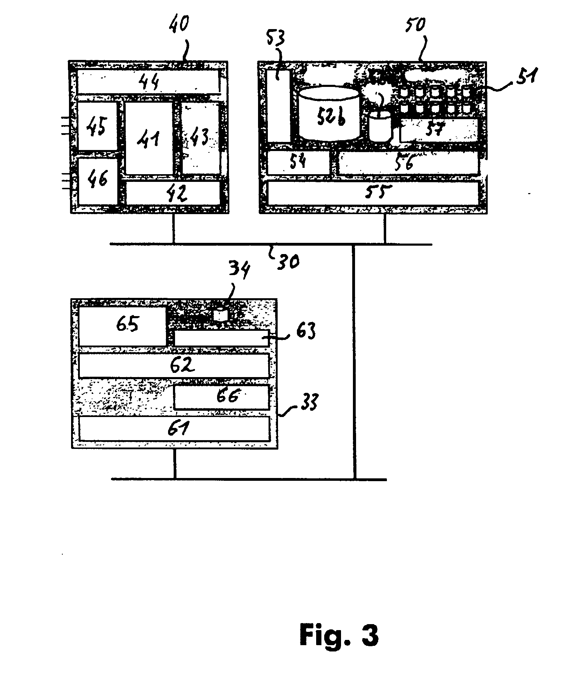

In der Fig. 2 ist eine schematische Darstellung der Vernetzung von Teilnehmerendgeräten zusammen mit einer erfindungsgemäßen Telekommunikationsanlage 40 offenbart. Zu den Teilnehmerendgeräten gehören drei Rechner 33, 35, 50, die miteinander und mit der Telekommunikationsanlage 40 über ein Datennetz 30 verbunden sind. Einer der drei Rechner 33, 35, 50 ist als ein erfindungsgemäßer Server 50 verwendet. Zusätzlich gehören zu den Teilnehmerendgeräten zwei Telefone 21, 22, die über eine Telefonleitung 20 miteinander und mit der Telekommunikationsanlage 40 verbunden sind. Wie in Fig.1 kann ein typischer Arbeitsplatz mit einem der Rechner 33, bzw. 35, und einem der Telefone 21, bzw. 22 bestückt werden.

Im Unterschied zum Stand der Technik wird in Fig. 2 von einem Computer-Produkt Gebrauch gemacht, das die Möglichkeit bietet, alle unterschiedlichen Adressverzeichnisse sowie Telefonbücher zentral auf Speichern 51, 52 des Servers 50 abzulegen. Kein Telefonbuch der Telekommunikationsanlage 40 wird nunmehr verwendet, um eine Telekommunikationsverbindung aufzubauen. Die hierfür benötigte Information ist auf dem Server 50 zentral gespeichert. Die Telekommunikationsanlage 40 ist dem entsprechend vollständig vom Server 50 gesteuert. Eine solche Telekommunikationsanlage 40 wird üblicherweise als CSTA-Telekommunikationsanlage (Computer Supported Telefony Application) bezeichnet. Gegenüber dem Stand der Technik kann der Benutzer am Telefon 21 eine Rufnummer aus einem Telefonverzeichnis auswählen " c ", das auf dem Speicher 51 des Servers 50 abgelegt ist. Dieses Telefonverzeichniss kann z.B. als persönliches Telefonverzeichnis aufgebaut sein, und entsprechend in dem Teil des Speichers 51 abgelegt sein, der ihm zugewiesen wurde. Weiterhin hat der Benutzer die Möglichkeit aus dem Rechner 35 seines Arbeitsplatzes Daten wie Adresse oder Telefonnummer aus seinem persönlichen Adressbuch abzufragen und/oder zu ändern " e ". Dies gilt auch für Informationen, die in dem allgemeinen Speicher 52 des Servers 50 gespeichert sind.

Mit dem erfindungsgemäßen Computer-Produkt wird eine regelmäßige Aktualisierung der Adressbücher, die in den Speichern 51, 52 des Servers 50 aufgebaut sind, durchgeführt. Hierfür wird mit Hilfe von Datensätze dieses Computer-Produktes auf neuen Daten überprüft, die vom Benutzer auf seinem Rechner 33, 35 eingegeben wurden, und auf dem entsprechenden Speicher 34, 36 der Rechner 33, 35 gespeichert sind. Falls neue Daten gefunden wurden, werden sie dann über das Datennetz 30 dem Server 50 zugesendet " d ", um in einem der darin befindlichen Adressbücher gespeichert zu werden.

In Fig. 3 ist die allgemeine Architektur des erfindungsgemäßen Computer-Produktes dargestellt. Als Beispiel ist die Telekommunikationsanlage 40, der als Server verwendete Rechner 50 und einer 33 der zwei anderen an dem Datennetz 30 angeschlossenen Rechner 33, 35 aus Fig.2 beschrieben. Da sie über das Datennetz 30 kommunizieren müssen, benötigen sie jeweils eine Schnittstelle 42, 55, 61 zu diesem Datennetz 30. Der Server 50 enthält zusätzlich zu der üblichen Verwaltungseinheit 53 und dem Standardprotokoll 54 mehrere Speicher 51, 52a, 52b. Wie auf Fig.2 ist der eine Speicher 51, auf dem die persönlichen Adressbücher abgelegt sind, in der Anzahl dieser Adressbücher unterteilt. Hingegen ist im Unterschied zur Fig.2 der Speicher 52, der jedermann zugänglich ist, in zwei Teile 52a und 52b unterteilt. Der eine Teil 52a ist reserviert für Daten, die die Telekommunikationsanlage 40 benötigt, wie z.B. Nebenstellennummer der Telefone 21, 22, die an der Telekommunikationsanlage 40 angeschlossen sind. Der andere Teil 52b ist reserviert für allgemeine Daten z.B. Rufnummern oder Emailadressen, die jedermann zugänglich sind.

Der Zugang zu all diesen Speichern erfolgt über eine Zugangsschnittstelle 56. Daten, die z.B. vom Rechner 33 über das Datennetz 30 an den Server 50 gesendet werden, werden, nachdem sie von der Schnittstelle 55 aus dem Datennetz 30 aufgenommen wurden, der Zugangsschnittstelle 56 übergeben und an die Speicher 51, 52a, 52b verteilt. Diese Client/Server Zugangsschnittstelle 56 ermöglicht das Lesen, das Schreiben, das Ändern und das Löschen von Einträgen in den Adressbüchern, die in den Speichern 51, 52a, 52b abgelegt sind. Es ist auch möglich mit Hilfe dieser Zugangsschnittstelle 56 ein oder alle Adressbücher nach einer Information zu durchsuchen.

Die Zugangsberechtigung zu den persönlichen Verzeichnissen, die in dem Speicher 51 des Servers 50 abgelegt sind, wird von einem Zugriffsmodul 57 des Computer-Produktes bestimmt, das einen direkten Zugriff zu diesem Speicher 51 hat.

Die Telekommunikationsanlage 40 enthält zusätzlich zu einer Rufsteuerungseinheit 41 eine übliche Betriebsschnittstelle 45 und Leitungssätze 46 zum Anschluß der für Telekommunikationszwecke verwendeten Teilnehmerendgeräte, wie z.B. Telefon oder Faxgerät. Direkt mit der Schnittstelle 42 zum Datennetz 30 ist eine Benutzerschnittstelle 43 verbunden, die zu Telekommunikationszwecken dient, und Teilnehmerendgeräten, die mit einem Display versehen sind, eine Möglichkeit bietet, das allgemeine Adressbuch, das auf dem Server 50 gespeichert ist, zu durchblättern. Die Telekommunikationsanlage 40 enthält zudem eine Software - Verwaltungsmodul 44 -, die die allgemeine Verwaltung der Telekommunikationsanlage 40 übernimmt. Dieses Verwaltungsmodul 44 sowie die Benutzerschnittstelle 43 bestehen aus Datensätzen, die Teile des erfindungsgemäßen Computer-Produktes bilden. Über das Verwaltungsmodul 44 werden automatisch die Adressbücher im Server 50 aktualisiert. Dies erfolgt, z.B. wenn ein neues für Telekommunikationszwecke verwendetes Teilnehmerendgerät an die Telekommunikationsanlage 40 angeschlossen wird, und entsprechend seine Nebenstellennummer im Adressbuch im Speicher 52a eingetragen werden muß.

Die als Rechner 33, 35 verwendeten Teilnehmerendgeräte, die am Datennetz 30 angeschlossen sind und vom erfindungsgemäßen Computer-Produkt angesprochen werden, enthalten zusätzlich zu den üblichen Einheiten wie eine Meldungsschnittstelle 62 (MAPI - Messages Application Programming Interface), und eine eigene Verwaltungseinheit 63, ein in ihren Speicher 34 abgelegtes Adressbuch sowie eine anwendungsbezogene Software 65 zur Verwaltung von Nachrichten. Zudem ist in den Rechnern 33, 35, ein Synchronisierungsmodul 66 abgelegt, das zum erfindungsgemäßen Computer-Produkt gehört. Mit Hilfe dieses Synchronisierungsmodules 66 wird eine Übereinstimmung der Inhalte aller Adressbücher sowohl im Server 50 als auch im Rechner 33 gewährleistet. Hierfür umfaßt das Synchronisierungsmodul 66 eine Schnittstelle für den Benutzer, mit der alle Einträge in den Speicher 34 des Teilnehmerendgerätes 33 gelesen werden, und auf den Server 50 wiedergegeben wird. Dadurch ist sicher gestellt, daß die Einträge in den Speichern 51, 52a, 52b des Servers 50 automatisch auf den neuesten Stand gebracht werden und die eigenen Einträgen des Benutzers auf seinem Rechner 33 auch enthalten.

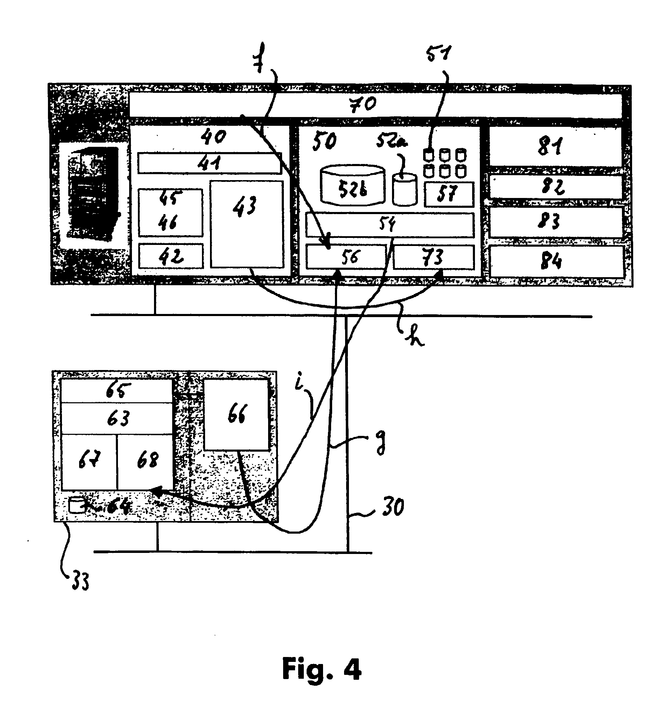

Ein typisches Beispiel der Architektur des erfindungsgemäßen Computer-Produkts für eine mittelgroße Telekommunikationsanlage ist schematisch mit Hilfe der Kommunikationsplattform in der Fig. 4 dargestellt. Diese Kommunikationsplattform umfaßt die Telekommunikationsanlage 40 und den als Server verwendeten Rechner 50 aus Fig.3. Diese Kommunikationsplattform soll mit unterschiedlicher anwendungsbezogener Software kommunizieren können. Im diesem Fall ist sie mit einem vereinheitlichten Meldungssystem 81, einem Fernzugang 82 zu für Telekommunikationszwecke verwendete Teilnehmerendgeräten, einem Internetzugang 83 sowie Rufanwendungen 84 im Server (TAPI - Telephony Application Programming Interface) verbunden. Das Verwaltungsmodul 44 der Telekommunikationsanlage 40 und die Verwaltungseinheit 53 des Servers 50 aus Fig.3 sind in diesem Beispiel zusammengefaßt in einer Datenschnittstelle 70. Letztere ermöglicht Zugriffe auf die Zugangsschnittstelle 56 des Servers 50 zu nehmen, um Einträge bezüglich neuer Benutzer der Telekommunikationsanlage 40 herzustellen oder Einträge von schon eingegebenen Benutzern zu erneuern " f ".

Parallel hierzu wird regelmäßig die Übereinstimmung des Inhaltes der persönlichen Adressbücher von den Benutzern durchgeführt, die einerseits zentral im Speicher 51 des Servers 50, und andererseits lokal in dem Speicher 34, 36 des jeweiligen Rechners 33, 35 der Benutzer gespeichert sind. Das Synchronisationsmodul 66 im Rechner 33 kann gegebenenfalls mit einer benutzerfreundlichen grafischen Oberfläche (GUI - Graphical User Interface) versehen sein. Diese Synchronisierungseinheit 66 arbeitet direkt mit der anwendungsbezogenen Software 65 (MAPI) des Rechners 33 zusammen, die ihrerseits mit der internen Adressenverwaltung 63 des Rechners 33 zusammenarbeitet.

Der Rechner 33 enthält zudem eine Software 67 zur allgemeinen Adressenverwaltung, wie z.B. Mikrosoft Outlook Addressbook. Diese Software 67 zusammen mit einem spezifischen Protokoll 68 (LDAP - Lightweight Directory Access Protocol) ermöglicht dem Benutzer aus seinem Rechner 33, 35 einen Zugriff auf alle Daten vom Server 50, die ihm frei zugänglich sind, zu bekommen. Hat der Benutzer z.B. vor nach einer speziellen Information, die in einem der Speicher 51, 52a, 52b abgelegt ist, zu suchen, wird er dies aus seinem Rechner 33, 35 machen können. Hierfür wird das Standardprotokoll 54 im Server vom spezifischen Protokoll 68 des Rechners 33 aktiviert "i", um eine z.B. parallele Suche in den drei Speichern 51, 52a, 52b durchzuführen.

Das Sammeln aller elektronischen Daten von unterschiedlichen Adressbüchern auf dem Server 50 sollte nicht dazu führen, daß jeder Benutzer aus irgendeinem am Datennetz 30 oder an der Telefonleitung 20 angeschlossenen Teilnehmerendgerät Zugriff auf alle diese Daten bekommt. Besonders wichtig ist, daß die persönlichen Adressbücher, die in einen persönlichen Teil des Speichers 51 des Servers 50 abgelegt sind, nur den Benutzern zugänglich sind, die dafür eine Berechtigung haben. Dafür ist im Server 50, das Zugriffsmodul 57 des erfindungsgemäßen Computer-Produktes abgelegt, um Zugriffsrechte bestimmen zu können. Damit können die im Server 50 abgelegten persönlichen Adressbücher nur z.B. über ein Passwort gelesen und/oder bearbeitet werden. Jedesmal wenn der Benutzer Zugriff auf Daten seines persönlichen Adressbuches haben will, muß er dann dieses Passwort an einem Teilnehmerendgerät eingeben. Eine alternative Lösung würde sich ergeben, wenn ein persönliches Adressbuch nur von einem einzigen und vorgegebenen Arbeitsplatz erreichbar ist. Hierfür würde jedes im Server 50 abgelegte persönliche Adressbuch mit einer Kennungsnummer des Arbeitsplatzes, wie z.B. die Kennungsnummer des dazugehörigen Rechners verknüpft. In diesem Fall entfällt die Eingabe eines Passwortes.

Mit diesem erfindungsgemäßen Computer-Produkt entfällt jegliches Adressbuch in der Telekommunikationsanlage 40. Üblicherweise enthält eine Telekommunikationsanlage ein Adressbuch mit mindestens allen Nebenstellenummern, der an der Telekommunikationsanlage angeschlossenen Telefone 21, 22. Jetzt werden die benötigten Nebenstellennummer bei Bedarf vom Vermittlungsmodul 44 der Telekommunikationsanlage 40 über die Benutzerschnittstelle 43 im Server 50 geholt. Hierfür wird die Benutzerschnittstelle 43 mit der Suchschnittstelle 73 des Servers 50 kommunizieren " h ". Die gewünschte Nebenstellennummer wird dann aus dem Speicher 52a des Servers 50 herausgelesen, und der Telekommunikationsanlage 40 übergeben.

Eine Anwendung dieses Computer-Produktes in einem Umfeld, in dem viele Arbeitsplätze über ein Datennetz und eine Telefonleitung mit dem Computer-Produkt verbunden sind, könnte folgenderweise aussehen: Im allgemeinen Speicher 52b vom Server 50 befinden sich alle Namen der Benutzer der Arbeitsplätze mit gegebenenfalls einigen für Jedermann zugänglichen Informationen. Im für die Telekommunikationsanlage 40 zugeteilten Speicher 52a des Servers 50 befindet sich die jeweiligen Nebenstellennummer der Arbeitsplätze dieser Benutzer. Wenn ein Benutzer am Rechner seines Arbeitsplatzes zusätzliche persönliche Informationen bezüglich eines im Server 50 schon eingetragenen Benutzers aufbewahren will, werden diese Informationen an den Server 50 übergeben, und in dem nur von ihm zugänglichen persönlichen Adressbuch im Server 50 abgelegt. Der zu diesem persönlichen Adressbuch zugehörige Benutzer kann z.B. die darin gespeicherten Informationen über das Display des Telefones seines Arbeitsplatzes abfragen.

Will der Benutzer A die Benutzerin B, die z.B. Schmidt, Carmen genannt ist, an ihrem privaten und nur von dem Benutzer A bekannten Telefonanschluß anrufen, wird der Benutzer A am Telefon seines Arbeitsplatzes z.B. die ersten vier Buchstaben "Schm" des Namens Schmidt eingeben. Am Display seines Telefones erscheint dann der Name eines dritten Benutzers C genannt Schmidt, Albert. Mit Hilfe einer Taste am Telefon kann der Benutzer A im allgemeinen, z.B. alphabetisch geordneten Telefonverzeichnis blättern, welches im Server 50 gespeichert ist, bis der Name der Benutzerin B genannt Schmidt, Carmen auf dem Display seines Telefones erscheint.

Der Benutzer A wird dann den Namen Schmidt, Carmen auswählen, z.B. durch Betätigung einer Taste - OK -. Es erscheint dann am Display die Rufnummer des Arbeitsplatzes dieser Benutzerin B. Nach einem erneuten Blättern über alle gespeicherten Rufnummern, wie z.B. des Handy's und des Faxes der Benutzerin B, wird der Benutzer A auf dem Display seines Telefones die private Nummer der Benutzerin B sehen können. Dabei wird der Benutzer A, selbst wenn diese private Nummer der Benutzerin B nur von ihm zugänglich ist, keinen besonderen Unterschied während des Blätterns aller Nummern der Benutzerin B bemerken.

Die Verwendung eines solchen erfindungsgemäßen Computer-Produktes ermöglicht mehrere Daten miteinander zu verknüpfen, selbst wenn sie unterschiedliche Zugriffsrechte haben, und/oder in unterschiedlichen Verzeichnissen des Servers 50 abgelegt sind. Da zudem das Computer-Produkt dazu dient, die im Server 50 abgelegten Daten auf dem neuesten Stand zu halten, kann z.B. der Benutzer A sicher sein, daß die private Nummer von der Benutzerin B, die er am Rechner seines Arbeitsplatzes eingegebenen hat und in dem Speicher dieses Rechners abgelegt ist, auch zum Server 50 übertragen wurde. Dieses erfindungsgemäße Computer-Produkt bietet weiterhin die Möglichkeit unterschiedliche Adressbücher zu verwenden, mit dem erheblichen Vorteil, daß alle Adressbücher untereinander und automatisch aktualisiert werden. Es erleichtert auch die Gestaltung einer rechnergesteuerten Telekommunikationsanlage. Sie kann vollkommen im Server integriert werden, in dem die wesentliche Teile des erfindungsgemäßen Computer-Produktes abgelegt sind. Im Unterschied zu den hier beschriebenen Beispielen, kann auch der Server 50 an der Telefonleitung 20 angeschlossen werden, an der die Telefone 21, 22 und die Telekommunikationsanlage 40, falls sie selbst nicht im Server 50 integriert ist, angeschlossen sind.

Das Computer-Produkt besteht allein aus Datensätze, die in mehreren Modulen unterteilt sind. Es ist deshalb durchaus möglich, das Computer-Produkt auf ein Speichermedium wie eine Diskette abzulegen. Die Kunden, die diese Diskette erworben haben, werden die unterschiedlichen Module mit Hilfe einer zusätzlichen Software auf ihre vernetzten Rechner und Telekommunikationsanlage aufladen. Anstelle der Diskette kann auch das Computer-Produkt den Kunden über Internet angeboten werden. Dies verdeutlicht, daß das erfindungsgemäße Computer-Produkt ohne großem Aufwand installiert werden kann, auch wenn die Telekommunikationsanlage und die vernetzten Rechner schon in Betrieb sind. Dadurch erleichtert sich eine nachträgliche Verbesserung und/oder Erweiterung des Computer-Produktes.

## Patentansprüche

1. Computer-Produkt, das Datensätze für Computer-Programme enthält, die Daten verwalten, die sich auf Speichern (34, 36, 51, 52) von über ein Datennetz (30) verbundenen Rechnern (33, 35, 50) befinden und mindestens teilweise zur Herstellung von Telekommunikationsverbindungen verwendet werden, wobei mindestens Teile des Computer-Produktes auf den Rechnern (33, 35, 50) und einer an mindestens einem dieser Rechner (33, 35, 50) angeschlossenen Telekommunikationsanlage (40) lauffähig sind,
**dadurch gekennzeichnet, daß**
das Computer-Produkt eine aktualisierte Version aller diesen Daten auf mindestens einem der Rechner (50) abgelegt imstande hält, wobei mindestens einige der Daten dieser aktualisierten Version den Rechner (33, 35) und der Telekommunikationsanlage (40) zur Verfügung gestellt sind.

2. Computer-Produkt nach Anspruch 1, dadurch gekennzeichnet, daß einige der Datensätze ein Synchronisationsmodul (66) bilden, wobei eine Kopie dieses Synchronisationsmodules (66) auf mindestens einigen der Rechner (33, 35) abgelegt ist, um jeweils auf neue Daten zuzugreifen, die in den jeweiligen Speichern (34, 36) dieser Rechner (33, 35) abgelegt sind, und sie über das Datennetz (30) dem Rechner (50) in dem die aktualisierte Version der Daten abgelegt ist, zur Verfügung zu stellen.

3. Computer-Produkt nach Anspruch 1, dadurch gekennzeichnet, daß einige der Datensätze eine Zugangschnittstelle (56) bilden, auf dem Rechner (50) in dem die aktualisierte Version der Daten abgelegt ist, lauffähig sind, und auf diese aktualisierte Version der Daten zugreift.

4. Computer-Produkt nach Anspruch 2 und 3, dadurch gekennzeichnet, daß die Zugangschnittstelle (56) über das Datennetz (30) mit dem Synchronisationsmodul (66) gekoppelt ist.

5. Computer-Produkt nach Anspruch 1, dadurch gekennzeichnet, daß einige der Datensätze eine auf der Telekommunikationsanlage (40) laufende Benutzerschnittstelle (43) bilden, mit der Teilnehmerendgeräte (21, 22), die für Telekommunikationszwecke verwendet und an der Telekommunikationsanlage (40) angeschlossen sind, einen Zugriff auf die aktualisierte Version der Daten bekommen.

6. Computer-Produkt nach Anspruch 1, dadurch gekennzeichnet, daß einige der Datensätze ein auf der Telekommunikationsanlage (40) laufendes Verwaltungsmodul (44) bilden, das die aktualisierte Version der Daten bei dem Anschluß an der Telekommunikationsanlage (40) von einem für Telekommunikationszwecke verwendeten neuen Teilnehmerendgerät oder bei der Ergänzung oder Änderung von für die Herstellung einer Telekommunikationsverbindung benötigten Daten neue aktualisiert.

7. Computer-Produkt nach Anspruch 1, dadurch gekennzeichnet, daß einige der Datensätze ein Zugriffsmodul (57) bilden, das die Zugriffsrechte eines Benutzers eines Rechners (33, 35) oder für Telekommunikationszwecke verwendeten Teilnehmerendgerätes (21, 22) auf mindestens einem Teil der aktualisierten Version der Daten bestimmt.

8. Computer-Produkt nach Anspruch 1, dadurch gekennzeichnet, daß die aktualisierte Version der Daten unterteilt ist, wobei ein Teil allen Benutzern der Rechner (33, 35) oder für Telekommunikationszwecke verwendete Teilnehmerendgeräte (21, 22) zugänglich ist, und ein anderer Teil zusätzlich unterteilt ist, und ein entsprechender Teil davon nur dem jeweiligen einzelnen Benutzer zugänglich ist.

9. Speichermedium, auf dem alle Datensätze des Computer-Produktes gemäß Anspruch 1 gespeichert sind.

10. Rechner (50), als Server verwendet, der mit einer Telekommunikationsanlage (40) und über ein Datennetz (30) mit mindestens einem Rechner (33, 35) verbunden ist, wobei im als Server verwendeten Rechner (50) Datensätze eines Computer-Produktes für Computer-Programme abgelegt sind, mit denen Daten verwaltet werden, die sich auf Speichern (34, 36, 51, 52) der Rechner (33, 35, 50) befinden und mindestens teilweise zur Herstellung von Telekommunikationsverbindungen verwendet werden,
**dadurch gekennzeichnet, daß**
im Speicher (51, 52) des als Server verwendeten Rechners (50) das Computer-Produkt eine aktualisierte Version aller dieser Daten imstande hält, wobei mindestens einige der Daten dieser aktualisierten Version den Rechnern (33, 35) und der Telekommunikationsanlage (40) zur Verfügung gestellt sind.

11. Rechner nach Anspruch 10, dadurch gekennzeichnet, daß die Telekommunikationsanlage (40) im als Server verwendeten Rechner (50) integriert ist.

12. Telekommunikationsanlage, die mit einem Rechner (50) verbunden ist, wobei in der Telekommunikationsanlage (40) Datensätze eines Computer-Produktes abgelegt sind, mit denen Daten verwaltet werden, die sich auf Speichern (34, 36, 51, 52) von vernetzten Rechnern (33, 35, 50) befinden und mindestens teilweise zur Herstellung von Telekommunikationsverbindungen verwendet werden,
**dadurch gekennzeichnet, daß**
Datensätze des Computer-Produktes, die in der Telekommunikationsanlage (40) abgelegt sind, ein Verwaltungsmodul (44) bilden, das eine Aktualisierung von Daten ermöglicht, die in einem (50) der Rechner (33, 35, 50) zentralisiert abgelegt sind.

13. Telekommunikationsanlage, nach Anspruch 12, dadurch gekennzeichnet, daß Datensätze des Computer-Produktes, die in der Telekommunikationsanlage (40) abgelegt sind, eine Benutzerschnittstelle (43) bilden, die einen Zugriff auf die im Rechner (50) zentralisierten abgelegten Daten ermöglicht.
